# EUROPÄISCHE PATENTSCHRIFT

(11) **EP 1 928 679 B1**
(45) Veröffentlichungstag und Bekanntmachung des Hinweises auf die Patenterteilung: **11.08.2010**
(21) Anmeldenummer: 06792168.4
(22) Anmeldetag: 20.09.2006
(51) Int. Cl.: B60K 7/00, B62D 5/04

(54) **ANTRIEBSEINHEIT MIT VERSCHACHTELTEN ELEKTROMOTOREN**
DRIVE UNIT COMPRISING NESTED ELECTRIC MOTORS
UNITE DE COMMANDE COMPORTANT DES MOTEURS ELECTRIQUES COMMUTES

(30) Priorität: 29.09.2005 DE 102005046617
(43) Veröffentlichungstag der Anmeldung: 11.06.2008
(73) Patentinhaber: ZF Friedrichshafen AG, 88038 Friedrichshafen (DE)
(72) Erfinder: SCHARFENBERG, Stephan, 99869 Tüttleben (DE); KETTELER, Karl-Hermann, 88677 Markdorf (DE); HEINRICH, Kai, 88289 Waldburg (DE)
(86) Internationale Anmeldenummer: PCT/EP2006/009127
(87) Internationale Veröffentlichungsnummer: WO 2007/036315

(56) Entgegenhaltungen:
- WO-A-2005/077695
- DE-A1- 10 328 651
- US-A- 3 161 083

## Beschreibung

Die Erfindung bezieht sich auf eine elektrische Antriebseinheit mit einem Lenkmotor und einem Fahrmotor entsprechend dem Oberbegriff des Anspruchs 1.

Solche Antriebseinheiten sind bekannt aus Flurförderfahrzeugen, bei denen ein Fahrzeugrad durch einen Antriebsmotor angetrieben und durch einen Lenkmotor gelenkt werden.

Demgemäß offenbart die DE 199 49 351 A1 eine elektrische Antriebseinheit für ein Flurförderfahrzeug, bei welchem ein Antriebsmotor und ein Lenkmotor koaxial angeordnet und die beiden Elektromotoren vertikal im Fahrzeug montiert sind. Dabei befindet sich zwischen dem Fahrantrieb und dem Lenkantrieb ein Untersetzungsgetriebe.

Die DE 103 28 651 A1 wird als nachstliegender Stand der Technik angesehen und zeigt eine elektrische Antriebseinheit mit den Merkmalen des Oberbegriffs des unabhängigen Anspruchs 1, bei welcher ebenso ein Antriebsmotor und ein Lenkmotor koaxial angeordnet und vertikal im Fahrzeug montiert sind. Der Fahrmotor befindet sich direkt über dem Lenkmotor.

Der vorliegenden Erfindung liegt die Aufgabe zugrunde, eine Antriebseinheit mit einem koaxial angeordneten Fahr- und Lenkmotor zu schaffen, durch welche ein Fahrzeugrad gelenkt und angetrieben werden kann, wobei die Anordnung in axialer Richtung besonders Platz sparend ausgestaltet sein soll.

Diese Aufgabe wird mit einer Antriebseinheit entsprechend den kennzeichnenden Merkmalen des Anspruchs 1 gelöst.

Diese Aufgabe wird erfindungsgemäß gelöst durch eine elektrische Antriebseinheit mit einem Lenkmotor und einem Fahrmotor, welche koaxial zueinander angeordnet sind. Ein erster der beiden Motoren besitzt eine hohle Antriebswelle, durch welche die Antriebswelle des zweiten Motors hindurchragt. Dabei treibt der Lenkmotor ein Fahrzeugrad im Sinne einer Lenkbewegung, der Fahrmotor das Fahrzeugrad im Sinne einer Antriebsbewegung an. Die beiden Elektromotoren bestehen jeweils zumindest aus einem Stator und einem Rotor. Die Statoren besitzen Spulen, deren Wicklungen zumindest an einer ihrer Stirnseiten in axialer Richtung aus den Statoren herausragen. Diese Wicklungsenden werden üblicherweise Wickelköpfe genannt. Erfindungsgemäß ist der Außendurchmesser der Wickelköpfe des ersten Motors kleiner als der Innendurchmesser der Wickelköpfe des zweiten Motors. Die beiden Motoren sind so angeordnet, dass sich die Wickelköpfe der beiden Motoren in axialer und radialer Richtung überlappen.

In einer vorteilhaften Ausgestaltung ist der Rotor des zweiten Motors nicht massiv, sondern hohl ausgeformt. Der Rotor besitzt die Form einer Glocke oder eines Topfes, welcher an einer ersten Stirnseite geschlossen und an einer zweiten Stirnseite geöffnet ist. Dadurch liegt der Rotor nicht über seine gesamte axiale Erstreckung an der dazugehörigen Antriebswelle an, sondern nur an seiner ersten Stirnseite. Durch diese Ausformung des Rotors wird ein Hohlraum gebildet, in welchem Elemente des ersten Motors zumindest teilweise angeordnet sind. Somit überlappen sich Teile der beiden Elektromotoren in axialer Richtung, wodurch axialer Bauraum gespart wird.

In einer weiteren Ausgestaltung ragt ein Lager der Antriebsachse des ersten Motors in den Rotor des zweiten Motors hinein.

In einer weiteren Ausgestaltung ist der Außendurchmesser des Stators des ersten Motors kleiner als der Innendurchmesser des Rotors des zweiten Motors. Ein Teil des ersten Motors ragt in den hohlen Rotor des zweiten Motors hinein. Die Wanddicke des hohlen Rotors des zweiten Motors wird durch die Auslegung des Magnetkreises und die Stärke der Stirnseite des hohlen Rotors durch das zu übertragende Moment bestimmt.

In einer weiteren Ausgestaltung werden für die beiden Elektromotoren Drehstrommotoren in Form von Synchron- (auch BLDC) oder Asynchronmotoren verwendet.

In einer vorteilhaften Ausgestaltung stellt der erste Motor den Lenkmotor und der zweite Motor den Fahrmotor der elektrischen Antriebseinheit dar.

Im Folgenden wird die Erfindung mit Bezug auf die beiliegenden Zeichnungen näher erläutert.

Es zeigen:
- Fig. 1: Aufbau einer ersten Antriebseinheit und
- Fig. 2: Aufbau einer zweiten Antriebseinheit.

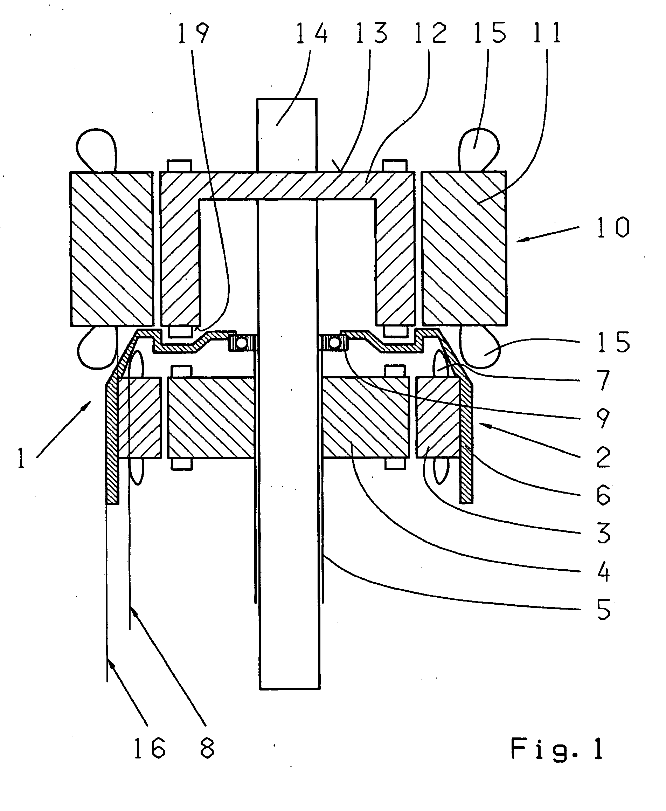

Fig. 1 zeigt eine Antriebseinheit 1 mit einem ersten Motor 2, der zumindest einen ersten Stator 3 und einen ersten Rotor 4 besitzt und als Lenkmotor dient. Über die hohle Antriebswelle 5 des Lenkmotors 2 wird das Fahrzeugrad gelenkt. Der Rotor 4 des Lenkmotors 2 ist drehfest mit der Antriebswelle 5 verbunden, der Stator 3 mit dem Motorgehäuse 6. Die Wicklungen des Stators 3 bilden an ihren axialen Enden Wickelköpfe 7 mit einem Außendurchmesser 8. Ein Lager 9 lagert die hohle Antriebswelle 5 im Motorgehäuse 6.

Der zweite Motor 10 ist axial oberhalb des ersten Motors 2 angeordnet, besitzt ebenfalls einen Stator 11 und einen Rotor 12 und dient als Antriebsmotor. Der Rotor 12 ist hohl und hat die Form eines Topfes, welcher an einer ersten Stirnseite 13 geschlossen und an einer zweiten Stirnseite 19 offen ausgebildet ist. Die erste Stirnseite 13 des Rotors 12 ist drehfest mit der Antriebswelle 14 verbunden, welche durch die hohle Antriebswelle 5 des Lenkmotors 2 das Fahrzeugrad antreibt, so dass sich das Fahrzeug fortbewegen kann. Am Stator 11 werden durch seine Wicklungen Wickelköpfe 15 gebildet, welche in axialer Richtung aus dem Stator 11 herausragen. Diese Wickelköpfe 15 besitzen dabei einen Innendurchmesser 16, welcher größer ist als der Außendurchmesser der Wickelköpfe 7 des Lenkmotors 2. Der Lenkmotor 2 ist weiterhin so angeordnet, dass seine Wickelköpfe 7 in axialer Richtung mit den Wickelköpfen 15 des Fahrmotors 10 überlappen, wodurch axialer Bauraum gespart wird. Zudem ragt das Lager 9 des Lenkmotors 2 in den hohlen Rotor 12 des Fahrmotors 10 hinein.

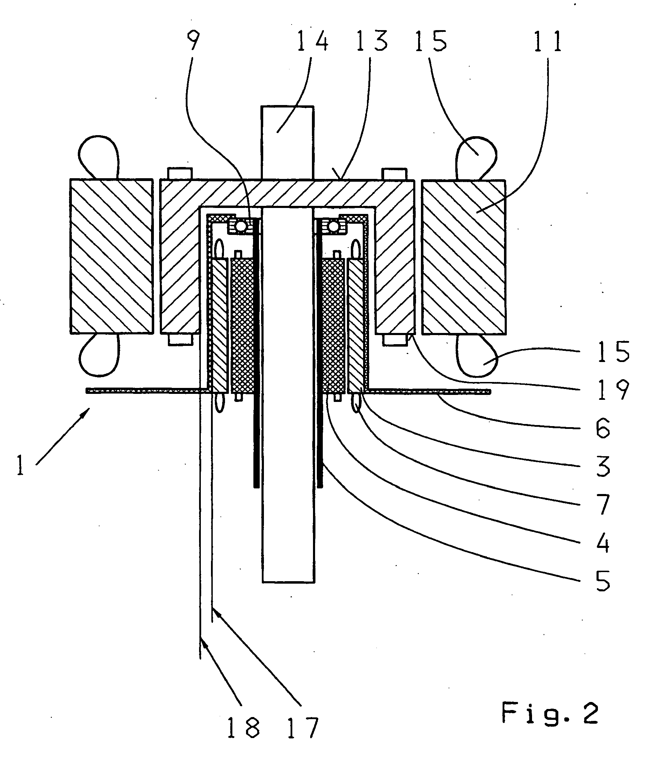

Fig. 2 zeigt einen ersten Motor 2 mit einem Stator 3 und einem Rotor 4, welcher als Lenkmotor dient. Die Antriebswelle 5 des Lenkmotors 2 ist hohl ausgebildet und lenkt das Fahrzeugrad. Der Rotor 4 des Lenkmotors 2 ist drehfest mit der Antriebswelle 5 verbunden, der Stator 3 mit dem Motorgehäuse 6. Ein Lager 9 lagert die hohle Antriebswelle 5 im Motorgehäuse 6. Der Stator 3 besitzt einen Außendurchmesser 17. Der zweite Motor 10 ist axial oberhalb des ersten Motors 2 angeordnet, besitzt ebenfalls einen Stator 11 und einen Rotor 12 und dient als Fahrmotor. Der Rotor 12 besitzt die Form einer Glocke oder eines Topfes, welcher an einer ersten Stirnseite 13 geschlossen und an einer zweiten Stirnseite 19 offen ausgebildet ist. Die erste Stirnseite 13 des Rotors 12 ist drehfest mit der Antriebswelle 14 verbunden, welche durch die hohle Antriebswelle 5 des Lenkmotors hindurchragt und das Fahrzeugrad antreibt, so dass sich das Fahrzeug fortbewegen kann. Der Fahrmotor 10 besitzt einen Innendurchmesser 18, der größer ist als der Außendurchmesser des Stators 3 des Lenkmotors 2. In einer vorteilhaften Ausgestaltung ragt der Grossteil des Lenkmotors 2 mitsamt seinem Gehäuse 6 in den hohlen Rotor 12 des Fahrmotors 10 hinein.

### Bezugszeichen

- 1: elektrische Antriebseinheit
- 2: erster Motor
- 3: Stator
- 4: Rotor
- 5: Antriebswelle
- 6: Gehäuse
- 7: Wickelkopf
- 8: Außendurchmesser
- 9: Lager
- 10: zweiter Motor
- 11: Stator
- 12: Rotor
- 13: Stirnseite
- 14: Antriebswelle
- 15: Wickelkopf
- 16: Innendurchmesser
- 17: Außendurchmesser
- 18: Innendurchmesser
- 19: Stirnseite

## Patentansprüche

1. Elektrische Antriebseinheit mit einem Lenkmotor und einem Fahrmotor, welche zumindest aus einem Rotor und einem Stator bestehen und koaxial zueinander angeordnet sind, und welche ein Fahrzeugrad lenken bzw. im Sinne einer Fahrbewegung antreiben, wobei ein erster Motor (2) eine hohle Antriebswelle (5) besitzt, durch welche eine Antriebswelle (14) des zweiten Motors (10) hindurchragt, **dadurch gekennzeichnet, dass** sich die Wickelköpfe (7) des Stators (3) des ersten Motors (2) radial innerhalb der Wickelköpfe (15) des Stators (11) des zweiten Motors (10) befinden und sich die Wickelköpfe (7, 15) in axialer Richtung überlagern.

2. Antriebseinheit nach Anspruch 1, **dadurch gekennzeichnet, dass** der Rotor (12) des zweiten Motors (10) hohl ist und die Form eines Topfes besitzt, wobei eine erste Stirnseite (13) des Rotors (12) mit der Antriebswelle (14) drehfest verbunden ist und eine zweite Stirnseite (19) des Rotors (12) offen ausgestaltet ist und der Rotor (12) zumindest teilweise Elemente des ersten Motors (2) umschließt.

3. Antriebseinheit nach einem der vorherigen Ansprüche, **dadurch gekennzeichnet, dass** ein Lager (9) der Antriebswelle (5) des ersten Motors (2) in axialer Richtung mit den Wickelköpfen (15) des zweiten Motors (10) überlappt.

4. Antriebseinheit nach Anspruch 3, **dadurch gekennzeichnet, dass** der Außendurchmesser (17) des Stators (3) des ersten Motors (2) kleiner ist als der Innendurchmesser (18) des Rotors (12) des zweiten Motors (10) und der erste Motor (2) zumindest teilweise radial innerhalb des Rotors (12) des zweiten Motors (10) angebracht ist und in diesen in axialer Richtung hineinragt.

5. Antriebseinheit nach einem der vorherigen Ansprüche, **dadurch gekennzeichnet, dass** für die beiden Motoren (2, 10) Drehstrommotoren in Form von Synchron- oder Asynchronmotoren verwendet werden.

6. Antriebseinheit nach einem der vorherigen Ansprüche, **dadurch gekennzeichnet, dass** der erste Motor (2) den Lenkmotor und der zweite Motor (10) den Fahrmotor der Antriebseinheit darstellt.

## Claims

1. Electric drive unit comprising a steering motor and a driving motor which are composed at least of a rotor and a stator and are arranged coaxially with respect to one another and which steer a vehicle wheel or drive it in the sense of a driving movement, wherein a first motor (2) has a hollow drive shaft (5) through which a drive shaft (14) of the second motor (10) projects, **characterized in that** the winding heads (7) of the stator (3) of the first motor (2) are located radially within the winding heads (15) of the stator (11) of the second motor (10), and the winding heads (7, 15) rest one on the other in the axial direction.

2. Drive unit according to Claim 1, **characterized in that** the rotor (12) of the second motor (10) is hollow and is in the form of a pot, wherein a first end side (13) of the rotor (12) is connected in a rotationally fixed fashion to the drive shaft (14), and a second end side (19) of the rotor (12) is of open design, and the rotor (12) at least partially encloses elements of the first motor (2).

3. Drive unit according to one of the preceding claims, **characterized in that** a bearing (9) of the drive shaft (5) of the first motor (2) overlaps the winding heads (15) of the second motor (10) in the axial direction.

4. Drive unit according to Claim 3, **characterized in that** the external diameter (17) of the stator (3) of the first motor (2) is smaller than the internal diameter (18) of the rotor (12) of the second motor (10), and the first motor (2) is mounted at least partially radially within the rotor (12) of the second motor (10) and projects therein in the axial direction.

5. Drive unit according to one of the preceding claims, **characterized in that** three-phase motors in the form of synchronous motors or asynchronous motors are used for the two motors (2, 10).

6. Drive unit according to one of the preceding claims, **characterized in that** the first motor (2) constitutes the steering motor, and the second motor (10) constitutes the driving motor of the drive unit.

## Revendications

1. Unité d'entraînement électrique comprenant un moteur de direction et un moteur de conduite, qui se composent au moins d'un rotor et d'un stator et qui sont disposés coaxialement l'un à l'autre, et qui dirigent une roue d'un véhicule ou l'entraînent dans le sens d'un déplacement du véhicule, un premier moteur (2) possédant un arbre d'entraînement creux (5) à travers lequel s'étend un arbre d'entraînement (14) du deuxième moteur (10), **caractérisée en ce que** les têtes d'enroulement (7) du stator (3) du premier moteur (2) se trouvent radialement à l'intérieur des têtes d'enroulement (15) du stator (11) du deuxième moteur (10) et les têtes d'enroulement (7, 15) se superposent dans la direction axiale.

2. Unité d'entraînement selon la revendication 1, **caractérisée en ce que** le rotor (12) du deuxième moteur (10) est creux et a la forme d'un pot, un premier côté frontal (13) du rotor (12) étant connecté de manière solidaire en rotation à l'arbre d'entraînement (14) et un deuxième côté frontal (19) du rotor (12) étant configuré sous forme ouverte et le rotor (12) entourant au moins en partie des éléments du premier moteur (2).

3. Unité d'entraînement selon l'une quelconque des revendications précédentes, **caractérisée en ce qu'**un palier (9) de l'arbre d'entraînement (5) du premier moteur (2) recouvre dans la direction axiale les têtes d'enroulement (15) du deuxième moteur (10).

4. Unité d'entraînement selon la revendication 3, **caractérisée en ce que** le diamètre extérieur (17) du stator (3) du premier moteur (2) est inférieur au diamètre intérieur (18) du rotor (12) du deuxième moteur (10) et le premier moteur (2) est monté au moins en partie radialement à l'intérieur du rotor (12) du deuxième moteur (10) et pénètre dans celui-ci dans la direction axiale.

5. Unité d'entraînement selon l'une quelconque des revendications précédentes, **caractérisée en ce que** pour les deux moteurs (2, 10), on utilise des moteurs triphasés sous forme de moteurs synchrones ou asynchrones.

6. Unité d'entraînement selon l'une quelconque des revendications précédentes, **caractérisée en ce que** le premier moteur (2) constitue le moteur de direction et le deuxième moteur (10) constitue le moteur de conduite de l'unité d'entraînement.
